# EUROPÄISCHE PATENTSCHRIFT

(11) **EP 1 863 622 B1**
(45) Veröffentlichungstag und Bekanntmachung des Hinweises auf die Patenterteilung: **17.11.2010**
(21) Anmeldenummer: 06723904.6
(22) Anmeldetag: 22.03.2006
(51) Int. Cl.: B29C 44/12

(54) **VERFAHREN ZUR HERSTELLUNG EINES BAUTEILS MIT MEHRTEILIGER DECKSCHICHT, UND BAUTEIL**
METHOD FOR PRODUCING A COMPONENT PROVIDED WITH A MULTIPART COVER LAYER AND SAID COMPONENT
PROCEDE POUR REALISER UN ELEMENT A COUCHE DE COUVERTURE EN PLUSIEURS PARTIES ET ELEMENT

(30) Priorität: 22.03.2005 DE 102005014085; 26.09.2005 FR 0509825
(43) Veröffentlichungstag der Anmeldung: 12.12.2007
(73) Patentinhaber: Faurecia Innenraumsysteme GmbH, 76767 Hagenbach (DE)
(72) Erfinder: HEINZ, Claus, 76764 Rheinzabern (DE); BAUMANN, Bernhard, 67363 Lustadt (DE); MEYER, Andreas, 76770 Hatzenbühl (DE); BEAUMONT, Sébastien, F-60540 Bornel (FR); BEAU, Godefroy, F-92250 La Garenne Colombes (FR); GEHRING, Andreas, 76133 Karlsruhe (DE); STOOF, Freddy, F-68180 Hornbourg-Wihr-en-Pleine (FR); NEUHARD, Thomas, 76891 Rumbach (DE)
(74) Vertreter: Pfenning, Meinig & Partner GbR
(86) Internationale Anmeldenummer: PCT/EP2006/002944
(87) Internationale Veröffentlichungsnummer: WO 2006/100117

(56) Entgegenhaltungen:
- DE-C1- 19 535 594
- US-A- 5 945 200
- US-A1- 2002 102 390
- US-A1- 2003 175 467
- US-A1- 2004 224 131
- PATENT ABSTRACTS OF JAPAN Bd. 2002, Nr. 06, 4. Juni 2002 (2002-06-04) & JP 2002 052548 A (INOAC CORP), 19. Februar 2002 (2002-02-19) in der Anmeldung erwähnt
- PATENT ABSTRACTS OF JAPAN Bd. 004, Nr. 158 (M-039), 5. November 1980 (1980-11-05) -& JP 55 107436 A (IKEDA BUSSAN CO LTD), 18. August 1980 (1980-08-18)
- PATENT ABSTRACTS OF JAPAN Bd. 1996, Nr. 02, 29. Februar 1996 (1996-02-29) -& JP 07 285138 A (INOAC CORP), 31. Oktober 1995 (1995-10-31)

## Beschreibung

Die Erfindung betrifft ein Verfahren zur Herstellung eines Bauteils mit einer mehrteiligen Deckschicht, insbesondere einer Dekorschicht, sowie ein Bauteil, welches mit dem erfindungsgemäßen Verfahren herstellbar ist.

Innenverkleidungsteile mit einer eine Dekoroberfläche bildenden Deckschicht sind in der Automobilindustrie bekannt. Sie finden beispielsweise Verwendung als Instrumententafeln, als Türverkleidungen, als Säulenverkleidungen oder auch als Staufachabdeckungen.

Zweck solcher Bauteile ist, gewünschte mechanische Eigenschaften mit optischen und auch haptischen Eigenschaften zu verbinden. Um dies zu erreichen, setzt sich in der Regel solch ein Bauteil zusammen aus einem Träger, der die mechanischen Eigenschaften bestimmt, einer Schaumschicht, die die haptischen Eigenschaften bestimmt und einer Deckschicht, die im Wesentlichen die optischen Eigenschaften bestimmt. Es sind auch Bauteile bekannt, welche auf genannte zusätzliche Schaumschicht verzichten, d.h., die Haut unmittelbar mit dem Träger verbunden ist.

Des weiteren ist bekannt, Deckschichten aus zwei oder mehreren Häuten zusammenzusetzen.

Ein Verfahren zur Herstellung eines Bauteils mit zwei miteinander verbundenen Deckschichten wird in der US 2003/0175467 A1 offenbart. Hierbei werden zunächst zwei Häute derart angeordnet, dass sich ihre Endbereiche überlappen. Anschließend werden diese beiden Häute durch einen Ofen geführt, wobei der Ofen zur Erhöhung der Temperatur ausgebildet ist, so dass die beiden Häute mit einem Substrat verbunden werden können. Anschließend werden die einander überlappenden Häute aufgrund der Hitze miteinander verbunden und die beiden Häute ebenfalls mit dem bereits vorgefertigten Schaumsubstrat laminiert.

Nachteilig an dem in der US 2003/0175467 A1 offenbarten Verfahren ist es, dass es zum Hinterspritzen und Hinterschäumen der Häute nur unzureichend geeignet ist. Hierzu müssten zunächst die beiden Häute in einem Ofen miteinander verbunden werden. Erst anschließend könnte ein Hinterschäumen stattfinden.

Problematisch bei mehrteiligen Deckschichten ist weiterhin, dass in den gemeinsamen Grenzbereichen der Häute beim Hinterschäumen oder Hinterspritzen Schaum bzw. hinterspritzte Masse aufgrund undichter Stellen austreten und somit die Qualität der Oberfläche mindern kann.

Ein bekanntes Verfahren für die schaumdichte Verbindung von Häuten ist, zunächst die Häute im Stoßbereich umzuschlagen und im umgeschlagenen Bereich miteinander zu vernähen. Die Naht wird dann für den Schäumvorgang zusätzlich abgedichtet.

Eine weitere Möglichkeit, Häute schaumdicht miteinander zu verbinden, beschreibt die Druckschrift DE 100 44 627 A1. Erfindungsgemäß werden zwei benachbarte Häute entlang ihrer Nahtlinie über ein Haltemittel miteinander verbunden. In einer Ausführungsform ist das Haltemittel als profilartige Leiste ausgebildet, die die benachbarten Häute entlang der Nahtlinie zusammenklemmt. Die derartig miteinander schaumdicht verbundenen Häute werden nach dem Verbinden mit dem Haltemittel in das Werkzeug eingelegt und dann hinterschäumt oder hinterspritzt.

Nachteile dieser Verfahren ist, dass ein zusätzlicher Verfahrensschritt und/oder zusätzliche Verbindungsmittel eingesetzt werden müssen, um die Häute miteinander zu verbinden.

Die Offenlegungsschrift JP 2002-052548 offenbart ebenfalls ein Verfahren zur Herstellung eines Bauteils mit einer mehrteiligen Deckschicht. Gemäß diesem Verfahren werden zwei eine Deckschicht bildende Häute in eine Werkzeughälfte derart eingelegt, dass diese sich in ihren Endbereichen überlappen. In der anderen Werkzeughälfte wird ein starrer Träger angeordnet, der eine Vielzahl von nebeneinander angeordneten Vorsprüngen aufweist. Der Träger wird dabei derart angeordnet, dass die Vorsprünge in die Kavität hineinragen. Beim Schließen des Werkzeuges kommen die Enden des Trägers auf den Überlappungsbereich der Häute zu liegen und drücken auf diese Weise abschnittsweise den Überlappungsbereich der Endbereiche der beiden Häute zusammen. Danach wird die Deckschicht hinterschäumt. Durch das Zusammenpressen des Überlappungsbereiches soll während des Hinterschäumens der Schaumdurchtritt verhindert werden.

Nachteil dieses Verfahrens bzw. dieser Art der Dichtung ist, dass zum einen der Träger aufgrund der Vorsprünge aufwendig herzustellen ist, und zum anderen an Gewicht zunimmt. Des Weiteren sind diese Vorsprünge durch die Häute hindurch spürbar. Es ist somit in diesem Bereich keine einheitliche Haptik möglich.

Aufgabe der vorliegenden Erfindung ist es deswegen, ein kostengünstiges Verfahren zur Herstellung eines Bauteils, insbesondere einer Verkleidung, mit einer hinterspritzten oder hinterschäumten Deckschicht aus zumindest zwei Häuten zu schaffen, das zum einen nur wenige Schritte umfasst, bei dem insbesondere auf ein schaum- oder spritzdichtes Verbinden der Häute vor dem Einlegen der Häute in das Werkzeug verzichtet werden kann, dass keine spezielle Gestaltung des Trägers zwecks Erzeugung der Dichtung benötigt, und dass eine nahezu gleichmäßige Haptik des Bauteils auch im Grenzbereich der Häute ermöglicht. Eine weitere Aufgabe der Erfindung ist es, ein Bauteil, insbesondere eine Verkleidung, zu schaffen, welches insbesondere mit dem erfindungsgemäßen Verfahren herstellbar ist und entsprechende Vorteile aufweist.

Diese Aufgaben werden durch ein Verfahren und ein Bauteil nach den unabhängigen Ansprüchen gelöst.

Das erfindungsgemäße Verfahren zur Herstellung eines Bauteils in einem Werkzeug mit einer eine Kavität bildenden ersten Werkzeughälfte und zweiten Werkzeughälfte umfasst folgende Schritte: a) Einlegen zumindest zweier Häute in die zweite Werkzeughälfte auf diese Weise, dass die Häute sich in ihren Endbereichen überlappen; b) Hinterschäumen oder Hinterspritzen der Häute mit einer Schaummasse oder Spritzmasse, wobei c) durch Anlegen von Unterdruck im Bereich der Überlappung der innen liegende Endbereich der einen Haut an den außen liegenden Endbereich der anderen Haut schaumdicht oder spritzgussdicht angedrückt wird.

Unter dem "innen" liegenden Endbereich ist der Endbereich der einen Haut zu verstehen, welcher bezüglich des "außen" liegenden Endbereichs der anderen Haut, mit dem zusammen die Überlappung gebildet wird, in seiner Lage tiefer innerhalb der Kavität liegt.

Dadurch, dass durch Anlegen von Unterdruck im Bereich der Überlappung der innen liegende Endbereich der einen Haut an den außen liegenden Endbereich der anderen Haut schaumdicht oder spritzgussdicht angedrückt wird, entfällt die Notwendigkeit, die beiden Häute schon vor dem Einlegen in das Werkzeug durch einen zusätzlichen Schritt miteinander schaum- oder spritzgussdicht zu verbinden, wie beispielsweise in der DE 100 44 672 A1 offenbart. Insbesondere können die Häute einzeln eingelegt werden.

Des weiteren ist kein speziell ausgebildeter Träger notwendig, der den Überlappungsbereich der Häute während des Hinterschäumens oder Hinterspritzens schaumdicht bzw. spritzdicht zusammenpresst. Aufgrund dessen kann ein Träger, falls verwendet, frei ausgebildet werden. Dadurch ist insbesondere eine gleichmäßige Haptik auch im Grenzbereich der Häute möglich.

Als Häute können nahezu beliebige flächige, dünnwandige Bauteile, insbesondere die in der Automobilindustrie als typische Häute verwendete Elemente, eingesetzt werden, beispielsweise Gießhäute, Slushhäute, beispielsweise aus PVC, Spritzhäute, beispielsweise aus PUR, mehrlagige Verbundfolien, Leder, Gewebe, Gewirke etc.

Als typisches Material für das Hinterschäumen soll hier Polyurethan genannt sein, für das Hinterspritzen Polypropylen.

Zu erwähnen ist, dass auch die Art des Einbringens der Schaum- oder Spritzmasse eine Rolle für die Dichtigkeit des Überlappungsbereichs spielt.

So ist vorzugsweise die Schaum- oder Spritzmasse zunächst über den innen liegenden Endbereich zu leiten. Auf diese Weise wird zusätzlich verhindert, dass die Schaum- oder Spritzmasse den Überlappungsbereich aufspreizt.

Vorteilhafte Weiterbildungen der Erfindung werden in den abhängigen Ansprüchen beschrieben.

Eine vorteilhafte Weiterbildung des Verfahrens sieht vor, dass durch den Unterdruck der innen liegende Endbereich der einen Haut im Bereich der Überlappung zumindest bereichsweise in Richtung der Oberfläche der zweiten Werkzeughälfte gedrückt wird.

Durch dieses Andrücken des innen liegenden Endbereichs in Richtung der Werkzeugoberfläche wird der außen liegende Endbereich der anderen Haut zwischen dem innen liegenden Endbereich und der Werkzeugoberfläche zusammengepresst. Durch das Zusammenpressen von innen liegendem Endbereich und außen liegendem Endbereich kann die Überlappung der Endbereiche schaumdicht bzw. spritzgussdicht abgedichtet werden.

Eine weitere vorteilhafte Weiterbildung des Verfahrens sieht vor, dass der außen liegende Endbereich der einen Haut im Überlappungsbereich durchgehende Öffnungen zur Übertragung des Unterdrucks auf den innen liegenden Endbereich der anderen Haut aufweist.

Durch die durchgehenden Öffnungen im außen liegenden Endbereich der einen Haut kann der Unterdruck effektiv auf den innen liegenden Endbereich der anderen Haut übertragen werden, wodurch es möglich ist, einen möglichen Spalt zwischen den beiden Endbereichen wirksam abzudichten.

Die Öffnungen können unterschiedlicher Geometrie sein, beispielsweise mit runden Öffnungen, eckigen Öffnungen oder als Schlitze ausgebildet sein. Um eine Dichtwirkung entlang der gesamten Überlappung der Endbereiche zu haben, sind derartige Öffnungen vorzugsweise entlang des gesamten Verlaufs des abzudichtenden Bereichs verteilt.

Ist eine hohe Dichtigkeit der Überlappung notwendig, so werden die Abstände zwischen den einzelnen Öffnungen entlang des Verlaufs der Überlappung möglichst klein gewählt. Diese Möglichkeit, die Abstände der Öffnungen sehr klein wählen zu können, unterscheidet vorliegende Erfindung insbesondere von der Offenlegungsschrift JP 2002-052548. Gemäß der dort offenbarten Erfindung müssen die Stege, die die sich überlappenden Endbereiche zusammenpressen, einen gewissen Mindestabstand aufweisen, um den Schäumvorgang, insbesondere den Schaumfluss, nicht zu stark zu behindern.

Für die Höhe des Unterdrucks zum Zusammenpressen der Endbereiche sind insbesondere Drücke im Beriech von 0,05 bar bis 0,3 bar geeignet.

Eine vorteilhafte Weiterbildung des Verfahrens sieht vor, dass im Bereich des Randes des außen liegenden Endbereichs der einen Haut ein Unterdruck ausgeübt wird.

Vorzugsweise wird der Unterdruck im Bereich des Randes des außen liegenden Endbereiches entlang des gesamten Verlaufs der abzudichtenden Überlappung ausgeübt. Hierdurch kann eine gleichmäßige, ununterbrochene Dichtwirkung erzielt werden. Im Gegensatz dazu werden beispielsweise in schon genannter Offenlegungsschrift JP 2002-052548 die Endbereiche nur abschnittsweise zusammengepresst, die Dichtwirkung variiert somit.

Eine besonders hohe Dichtwirkung lässt sich erzielen, wenn sowohl im Bereich des Rands des außen liegenden Endbereiches als auch an wie oben beschriebene Öffnungen im außen liegenden Endbereich ein Unterdruck angelegt wird. Beide Varianten lassen sich aber auch getrennt einsetzen.

Eine weitere vorteilhafte Weiterbildung des Verfahrens sieht vor, dass die Endbereiche der Häute nach dem Einlegen der Häute in die zweite Werkzeughälfte zumindest bereichsweise miteinander verschmolzen werden.

Grundsätzlich ist eine dauerhafte stabile Verbindung der Endbereiche aufgrund der Wirkung des hinterschäumten oder hinterspritzten Materials, welches die Häute ebenfalls fixieren kann, nicht mehr notwendig. Trotzdem kann es sinnvoll sein, die Endbereiche der beiden Häute zusätzlich miteinander zu verbinden, beispielsweise um die Optik zu verbessern. Erfindungsgemäß wird dies durch eine Verschmelzung der Endbereiche erreicht. Unter Verschmelzen soll hier auch ein bereichsweises Anschmelzen zumindest einer der Oberflächen eines Endbereiches, welcher mit dem gegenüber liegenden Endbereich in Kontakt ist, verstanden werden.

Das Verschmelzen der Endbereiche kann beispielsweise durch Ausübung von ausreichend hohem Druck beim Zusammenpressen der Endbereiche, durch zusätzliche Erwärmung der Endbereiche vor dem Einlegen in das Werkzeug bzw. im eingelegten Zustand erreicht werden, beispielsweise durch ein Erwärmen des Werkzeugs und/oder durch Wärme der Schaummasse bzw. Spritzmasse.

Grundsätzlich bleiben natürlich die Möglichkeiten erhalten, die Endbereiche nachträglich zu verkleben, zu verschweißen, zu klemmen oder andersartig miteinander zu verbinden.

Eine weitere vorteilhafte Weiterbildung des Verfahrens sieht vor, dass zumindest eine der Häute ein Thermoplast ist.

Dies ist insbesondere dann sinnvoll, wenn die Endbereiche der beiden Häute miteinander verschmolzen werden sollen. In diesem Falle können auch schon erstarrte Häute miteinander noch verbunden werden.

Als Materialien eignen sich beispielsweise thermoplastische Elastomere, thermoplastische Olephine, Mischungen von PVC und ABS, ASA und Mischungen von PVC und ASA.

Eine weitere vorteilhafte Weiterbildung der Erfindung sieht vor, dass die Häute in ihrem Überlappungsbereich derart geformt sind und derart angeordnet werden, dass diese während des Hinterschäumens oder Hinterspritzens durch den Druck der Schaummasse oder Spritzmasse zusammengepresst werden.

Ein Überlapp von Häuten, der nicht durch äußere Mittel zusammen gehalten wird, wird in der Regel beim Hinterschäumen oder Hinterspritzen durch die sich ausbreitende Schaum- oder Spritzmasse aufgespreizt.

Erfindungsgemäß ist nun vorgesehen, die Häute in ihrem Überlappungsbereich, insbesondere der innen liegende Endbereich der einen Haut derart geometrisch zu verformen, dass ein Aufspreitzen des Überlapps verhindert wird, vorzugsweise der Druck der eingebrachten Schaum- oder Spritzmasse für das Zusammenpressen der überlappenden Endbereiche ausgenutzt werden kann.

Erfindungsgemäß bevorzugt ist, dass der innen liegende Endbereich der einen Haut im Randbereich eine angeschrägte Dichtungslippe aufweist.

Durch diese angeschrägte Dichtungslippe hat die in das Werkzeug eingebrachte Schaum- oder Spritzmasse keinen Angriffspunkt: Durch die Schräge wird die Masse über den innen liegenden Endbereich geleitet. Auf den innen liegenden Endbereich wird gleichsam eine Kraft ausgewirkt, die den innen liegenden Endbereich gegen den außen liegenden Endbereich presst.

Eine weitere vorteilhafte Weiterbildung des Verfahrens sieht vor, dass zumindest eine der Häute im Überlappungsbereich eine an die Oberfläche der gegenüber liegenden Haut grenzenden Aussparung aufweist zur Aufnahme von Schaummasse oder Spritzmasse, die möglicherweise in den Überlappungsbereich eindringen könnte.

Eine weitere vorteilhafte Weiterbildung des Verfahrens sieht vor, dass in der ersten Werkzeughälfte ein Träger angeordnet wird, und durch Schließen des Werkzeugs der Träger mit dem innen liegenden Endbereich der einen Haut im Bereich des Überlappungsbereichs flächig in Kontakt gebracht wird.

Durch ein derartiges Inkontaktbringen kann zusätzlich Druck auf den innen liegenden Endbereich ausgeübt werden, durch den der innen liegende Endbereich und der außen liegende Endbereich zusammen gepresst werden.

Vorzugsweise ist der Träger ununterbrochen entlang des gesamten abzudichtenden Überlappungsbereichs der Häute flächig in Kontakt mit dem innen liegenden Endbereich der einen Haut.

In diesem Zusammenhang ist erfindungsgemäß bevorzugt, dass in der zweiten Werkzeughälfte an ihrer Oberfläche im Bereich der Überlappung der Häute ein in seiner Ausdehnung veränderbares, entlang des Überlappungsbereiches verlaufendes Element, vorzugsweise ein elastischer Schlauch vorgesehen ist, und mittels dieses Elementes der Überlappungsbereich gegen den Träger gepresst wird.

Dies stellt eine weitere Möglichkeit dar, die Dichtung des Überlapps zu erhöhen.

Des weiteren offenbart die vorliegende Erfindung ein Bauteil, insbesondere ein Bauteil hergestellt mit dem Verfahren nach einem der Ansprüche 1 bis 10, mit zumindest zwei nebeneinander angeordneten Häuten, die sich in ihren Endbereichen überlappen, und einer hinter den Häuten liegenden Schaumschicht oder Spritzgussschicht, wobei der außen liegende Endbereich der einen Haut im Bereicht der Überlappung durchgehende Öffnungen aufweist.

Ein derartiges Bauteil kann insbesondere als Innenverkleidungsteil, beispielsweise als Instrumententafel oder Türverkleidung eines Automobils eingesetzt werden.

Eine vorteilhafte Weiterbildung des Bauteils sieht vor, dass der innen liegende Endbereich der einen Haut im Randbereich des Endbereiches eine angeschrägte Dichtungslippe aufweist.

Eine weitere vorteilhafte Weiterbildung des Bauteils sieht vor, dass zumindest eine der Häute im Überlappungsbereich eine an die Oberfläche der gegenüber liegenden Haut grenzende Aussparung aufweist.

Eine weitere vorteilhafte Weiterbildung des Bauteils sieht vor, dass das Bauteil einen Träger aufweist, der den innen liegenden Endbereich der einen Haut im Bereich der Überlappung flächig berührt.

Vorzugsweise ist der Träger im gesamten Verlauf des abzudichtenden Bereichs der Überlappung ununterbrochen flächig in Kontakt mit dem innen liegenden Endbereich.

Die Erfindung wird nun anhand von Ausführungsbeispielen, welche teilweise durch Zeichnungen dargestellt werden, näher erläutert. Dabei zeigt:
- Figur 1: eine erste Ausführungsform eines erfin- dungsgemäßen Bauteils und eine erste Aus- führungsform eines erfindungsgemäßen Ver- fahrens im Zustand nach Abschluss des Hinterschäumprozesses;
- Figur 2: eine zweite Ausführungsform eines erfin- dungsgemäßen Bauteils und eines erfin- dungsgemäßen Verfahrens;
- Figur 3: eine dritte Ausführungsform eines erfin- dungsgemäßen Bauteils und eine dritte Ausführungsform eines erfindungsgemäßen Verfahrens im Zustand nach Beenden des Hinterschäumprozesses;
- Figur 4: eine vierte Ausführungsform eines erfin- dungsgemäßen Bauteils und eine vierte Ausführungsform eines erfindungsgemäßen Verfahrens im Zustand nach Beenden des Hinterschäumprozesses;
- Figur 5: eine fünfte Ausführungsform eines erfin- dungsgemäßen Verfahrens nach Beendigung des Hinterschäumprozesses.

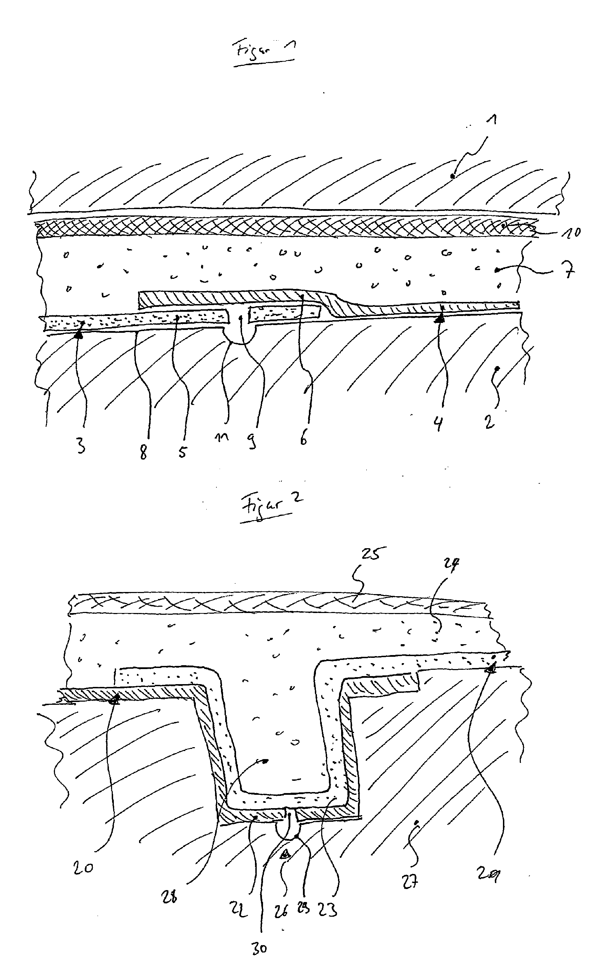

Figur 1 zeigt eine erste Ausführungsform eines erfindungsgemäßen Bauteils, hier ein Innenverkleidungsteil eines Automobils, in einer Querschnittsansicht, welches gemäß einer ersten Ausführungsform des erfindungsgemäßen Verfahrens erhalten werden kann.

Das Bauteil enthält zwei nebeneinander angeordnete Häute 3, 4, die sich in ihren Endbereichen 5, 6 überlappen, eine hinter den Häuten liegende Schaumschicht 7 und einen starren Träger 10, welcher Schaumschicht 7 und Häute 3, 4 trägt. Die Häute 3, 4, welche beide aus demselben Thermoplast bestehen, aber unterschiedliche Farben aufweisen, bilden eine zweifarbige Deckschicht des Bauteils. Der außen liegende Endbereich 5 der einen Haut 3 weist im Bereich der Überlappung durchgehende Öffnungen auf. Diese Öffnungen sind quadratisch und entlang des gesamten Verlaufs der Überlappung der beiden Endbereiche 5 und 6 gleichmäßig verteilt.

Nach der ersten Ausführungsform des erfindungsgemäßen Verfahrens wird zunächst in einem Werkzeug mit einer eine Kavität bildenden ersten Werkzeughälfte 1 und zweiten Werkzeughälfte 2 zwei Häute 3, 4 auf diese Weise in die zweite Werkzeughälfte 2 eingelegt, dass die Häute sich in ihren Endbereichen 5, 6 flächig überlappen. Der außen liegende Endbereich 5 der einen Haut 3 weist im Überlappungsbereich oben beschriebene durchgehende Öffnungen 9 zur Übertragung eines Unterdruckes auf den innen liegenden Endbereich 6 der anderen Haut 4 auf.

Über einen Kanal 11 in der zweiten Werkzeughälfte 2, der derart in der Oberfläche der zweiten Werkzeughälfte angeordnet ist, dass er direkt unterhalb den Öffnungen 9 des außen liegenden Endbereichs (und damit direkt an der Oberfläche 8 der zweiten Werkzeughälfte liegend) verläuft, ein Unterdruck ausgeübt. Durch diesen Unterdruck wird der innen liegende Endbereich 6 der einen Haut 4 im Bereich der Überlappung in Richtung der Oberfläche 8 der zweiten Werkzeughälfte gedrückt. Der außen liegende Endbereich 5 wird dadurch zwischen Werkzeugoberfläche 8 und innen liegendem Endbereich 6 zusammen gepresst. Aufgrund des Gegendruckes der Oberfläche 8 der starren zweiten Werkzeughälfte wird gleichsam der innen liegende Endbereich 6 der einen Haut 4 an den außen liegenden Endbereich 5 der anderen Haut 3 schaumdicht angedrückt.

In der ersten Werkzeughälfte wird in einem weiteren Schritt ein starrer Träger 10 angeordnet.

Danach wird eine Schaummasse in das Werkzeug eingebracht, das Werkzeug geschlossen und der Schäumprozess begonnen.

Den Zustand des Verfahrens nach Beendigung des Schäumprozesses stellt Figur 1 dar.

Figur 2 zeigt eine zweite Ausführungsform eines erfindungsgemäßen Bauteils, sowie eine zweite Ausführungsform eines erfindungsgemäßen Verfahrens.

Die zweite Ausführungsform des erfindungsgemäßen Bauteils weist zwei nebeneinander angeordnet Häute 20, 21, die sich in ihren Endbereichen 22, 23 überlappen, eine hinter den Häuten 20, 21 liegende Schaumschicht 24 und einen starren Träger 25, der Schaumschicht 24 und Häute 20, 21 trägt, auf. Des weiteren weist der außen liegende Endbereich 22 der Haut 20 im Bereich der Überlappung durchgehende Öffnungen 30 auf. Die Öffnungen sind wie in der ersten Ausführungsform beschrieben ausgebildet.

Im Gegensatz zur ersten Ausführungsform sind die Endbereiche 22, 23 der beiden Häute 20, 21 in ihrem Überlappungsbereich in der Form eines rechteckförmigen Stegs 26 abgewinkelt, wobei beide Endbereiche 22, 23 über den Steg 26 mit ihren Rändern hinaus reichen.

Gemäß der zweiten Ausführungsform des erfindungsgemäßen Verfahrens werden in einem Werkzeug mit einer eine Kavität bildenden ersten Werkzeughälfte (nicht gezeigt) und zweiten Werkzeughälfte 27 zunächst zwei Häute 20, 21 in die zweite Werkzeughälfte auf diese Weise eingelegt, dass die Häute sich in ihren Endbereichen 22, 23 überlappen.

Die zweite Werkzeughälfte 27 weist an ihrer Oberfläche eine im Profil rechteckförmige Nut 28 auf. Am Boden der Nut 28 befindet sich ein Kanal 29, über den ein Unterdruck ausgeübt werden kann.

Beide Häute 20, 21 werden derart in die zweite Werkzeughälfte eingelegt, dass die Endbereiche 22, 23 der Häute der Form der Nut 28 folgen. Der außen liegende Endbereich 22 weist oben schon beschriebene Öffnungen 30 auf, die mit dem Kanal 29 im Boden der Nut 28 der zweiten Werkzeughälfte 27 in Deckung gebracht werden.

Danach wird das Verfahren analog dem Verfahren der ersten Ausführungsform fortgesetzt.

Dadurch, dass die sich überlappenden Endbereiche einen abgewinkelten Verlauf haben, ist die Dichtwirkung besonders hoch, da die abgewinkelten Stellen ein Hindernis für das Eindringen von Schaum oder Spritzmasse bilden. Grundsätzlich können auch andere abgewinkelte Formen als hier vorgestellt verwendet werden. Derartige Ausbildungen der Endbereiche können im fertigen Bauteil beispielsweise als Zierleiste gestaltet werden.

In beiden Ausführungsformen sind die jeweiligen Häute Thermoplaste, die vor dem Einlegen vorgewärmt wurden. Während des Schäumprozesses wurden die Häute 3, 4 bzw. 20, 21 durch Heizen des Werkzeuges und unter dem zusätzlichen Einfluss der heißen Schaummasse miteinander verschmolzen.

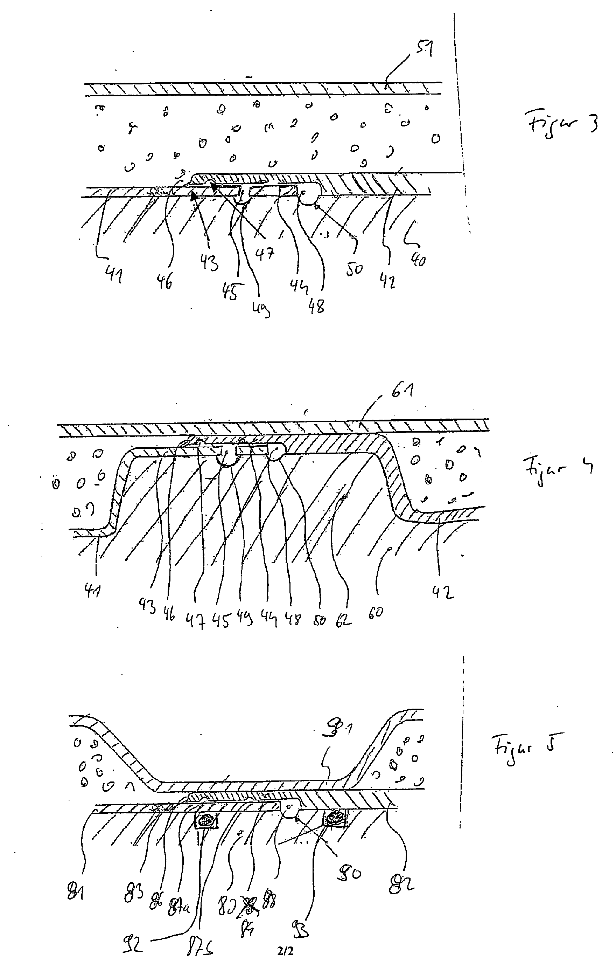

Figur 3 zeigt den Zustand einer dritten Ausführungsform eines erfindungsgemäßen Verfahrens nach der Beendigung des Schäumvorganges, sowie eine dritte Ausführungsform eines erfindungsgemäßen Bauteiles.

Nach der dritten Ausführungsform des erfindungsgemäßen Verfahrens wird zunächst in einem Werkzeug mit einer eine Kavität bildenden ersten Werkzeughälfte (nicht gezeigt) und zweiten Werkzeughälfte 40 zwei Häute 41, 42 auf diese Weise eingelegt, dass sich die Häute in ihren Endbereichen 43, 44 flächig überlappen.

Des weiteren weist der außen liegende Endbereich 43 der Haut 41 im Überlappungsbereich durchgehende Öffnungen 45 zur Übertragung des Unterdrucks auf den innen liegenden Endbereich 44 der Haut 42 auf. Diese Öffnungen sind entsprechend den in der ersten Ausführungsform beschriebenen Öffnungen ausgebildet.

Der innen liegende Endbereich 44 weist im Randbereich eine angeschrägte Dichtungslippe 46 auf. Die Dichtungslippe 46 verläuft entlang der gesamten Überlappung der beiden Häute 41, 42.

Des weiteren weist der innen liegende Endbereich 44 im Überlappungsbereich eine an die Oberfläche des gegenüber liegenden Endbereiches 43 grenzende Aussparung 47 für die Aufnahme von Schaum auf, der möglicherweise in dem Zwischenbereich der beiden Endbereiche eindringen könnte.

Die Haut 42 ist, ausgenommen des innen liegenden Endbereiches 44, dicker als der Endbereich 43 der Haut 41. In ihrem Endbereich 44 ist die Haut 42 als Stufe geformt, wobei die Höhe der Stufe der Dicke des Endbereiches 43 der Haut 41 entspricht. Die Endbereiche 43, 44 überlappen sich aufgrund dessen ohne eine Knickung der Haut 42 im Überlappungsbereich.

Eine derartige Stufe hat den Vorteil, dass die Endbereiche der benachbarten Häute im Bereich der Überlappung allein aufgrund ihrer speziellen Form, insbesondere ohne zusätzliche Anpressmittel, flächig aufeinander liegen.

Des weiteren sind die Häute 41, 42 so angeordnet, so dass ein Freiraum 48 zwischen dem Rand etwas versetzt des außen liegenden Endbereiches 43 und der Stufe der Haut 42 verbleibt.

Die zweite Werkzeughälfte 40 weist an ihrer Oberfläche zwei Kanäle 49, 50 auf, über die ein Unterdruck ausübbar ist. Die Kanäle 49, 50 sind derart angeordnet, dass der Kanal 49 direkt unter der Öffnung 45 des außen liegenden Endbereichs 43, und der Kanal 50 unter dem Freiraum 48 zwischen dem Rand des außen liegenden Endbereichs 43 und der Stufe der Haut 42 zu liegen kommen.

Im folgenden Schritt des Verfahrens wird über die Kanäle 49, 50 ein Unterdruck ausgeübt, der den innen liegenden Endbereich 44 an den außen liegenden Endbereich 43 schaumdicht zusammenpresst.

In der ersten Werkzeughälfte wird ein Träger 51 angeordnet. Danach wird eine Schaummasse in das Werkzeug eingebracht, das Werkzeug geschlossen und der Schäumprozess begonnen.

Während des Hinterschäumprozesses wird die Dichtheit des Überlapps der Endbereiche 43, 44 durch den Unterdruck gewährleistet. Des weiteren trägt die angeschrägte Dichtungslippe 46 am Rand des Endbereiches 44 aufgrund ihrer geometrischen Form dazu bei, dass die Schaummasse während des Fließprozesses zum einen die Überlappung nicht aufspreizt, zum anderen die beiden Endbereiche 43, 44 zusammen gepresst werden.

Figur 3 zeigt den Zustand des Verfahrens nach Beendigung des Schäumprozesses.

Danach kann das Werkzeug geöffnet und das Bauteil entnommen werden.

Alternativ kann das erfindungsgemäße Verfahren ohne ausgebildete Dichtlippe 46, ohne Aussparung für die Aufnahme von Schaum 47 und ohne durchgehende Öffnungen im außen liegenden Endbereich 43, wodurch die Dichtwirkung im wesentlichen durch die Ausübung von Unterdruck im Freiraum 48 erzeugt wird, erfolgen. Ebenso könnte auch auf die Ausbildung des Freiraumes 48 verzichtet werden. Des weiteren kann der Freiraum 48 auch auf andere Art gebildet werden, beispielsweise durch eine Schräge der Haut 42 im Bereich des Randes des außen liegenden Endbereiches 43, wie beispielsweise in Figur 1 dargestellt. Auch die Dichtlippe 46 und die Aufnahme 47 können unabhängig voneinander eingesetzt werden. Die verschiedenen Komponenten sind in vielfältigen Kombinationen einsetzbar.

Figur 4 zeigt den Zustand einer vierten Ausführungsform eines erfindungsgemäßen Verfahrens nach Beendigung des Hinterschäumprozesses, sowie eine vierte Ausführungsform eines erfindungsgemäßen Bauteils.

Gemäß der vierten Ausführungsform des erfindungsgemäßen Verfahrens werden analog zur dritten Ausführungsform zwei Häute 41, 42 in eine zweite Werkzeughälfte 60 angeordnet. Die Häute 41, 42 sind mit den in der dritten Ausführungsform beschriebenen Charakteristiken ausgebildet, weisen insbesondere eine Dichtungslippe 46, eine Aussparung 47, eine durchgängige Öffnung 45 und einen Freiraum 48 auf (die Indizes wurden entsprechend beibehalten).

Entsprechend weist die zweite Werkzeughälfte 60 zwei Kanäle 49, 50 zum Ausüben eines Unterdruckes auf den innen liegenden Endbereich 44 auf.

Abweichend von der dritten Ausführungsform weist die zweite Werkzeughälfte 60 im Bereich der Überlappung der Endbereiche 43, 44 einen Steg 62 auf. Der Steg 62 ist so bemessen, dass zwischen der Oberfläche der ersten Werkzeughälfte und der Oberfläche der Überlappung gerade Platz für die Anordnung eines Trägers 61 verbleibt.

Nach der vierten Ausführungsform des erfindungsgemäßen Verfahrens werden zunächst die Häute 41, 42 in oben beschriebener Weise in die zweite Werkzeughälfte eingelegt. Danach wird in der ersten Werkzeughälfte ein Träger 61 angeordnet. Danach wird eine Schaummasse beidseitig des Steges 62 der zweiten Werkzeughälfte 60 eingebracht. Das Werkzeug wird geschlossen. Durch das Schließen des Werkzeuges wird der Träger 61 mit dem innen liegenden Endbereich 44 der einen Haut im Bereich des Überlappungsbereiches flächig in Kontakt gebracht.

In diesem Ausführungsbeispiel ist der Steg 62 derart ausgebildet, dass der Träger 61 über den gesamten Überlappungsbereich der Endbereiche 43, 44 flächig und ununterbrochen mit dem innen liegenden Endbereich 44 in Kontakt ist. Auf diese Weise wird die Dichtung im Bereich der Überlappung der Endbereiche 43, 44 zusätzlich verstärkt.

Das mit diesem Verfahren hergestellte Bauteil weist neben den Merkmalen des Bauteils der dritten Ausführungsform einen Träger auf, der den innen liegenden Endbereich 44 der einen Haut 42 im Bereich der Überlappung flächig berührt.

Figur 5 zeigt den Zustand einer fünften Ausführungsform eines erfindungsgemäßen Verfahrens nach Beendigung des Schäumprozesses.

Gemäß der fünften Ausführungsform des erfindungsgemäßen Verfahrens werden zwei Häute 81, 82 in die zweite Werkzeughälfte 80 eines Werkzeuges mit einer eine Kavität bildenden ersten Werkzeughälfte (nicht gezeigt) und zweiten Werkzeughälfte 80 eingelegt.

Der Rand des innen liegenden Endbereiches 84 weist wie in der dritten Ausführungsform eine angeschrägte Dichtlippe 86, eine an die Oberfläche des gegenüber liegenden außen liegenden Endbereiches 43 grenzende Aussparung 87a und eine Stufenform, welche durch eine variierende Dicke erzeugt wird, auf. Zusätzlich ist eine weitere Aussparung 87b, welche gegenüber der Oberfläche des außen liegenden Endbereiches, aber seitlich versetzt zur ersten Aussparung 87a liegt, vorgesehen.

Der außen liegende Endbereich 83 ist (im Gegensatz zum Endbereich 43 der dritten Ausführungsform) durchgehend, d.h., ohne Öffnungen.

Die Häute 81 und 82 sind etwas versetzt auf der Werkzeugoberfläche der zweiten Werkzeughälfte angeordnet, so dass zwischen dem Rand des außen liegenden Endbereiches 83 und der Stufe der Haut 82 ein Freiraum 88 gebildet wird.

Die zweite Werkzeughälfte weist an ihrer Oberfläche einen Kanal 90 zum Ausüben eines Unterdruckes auf, der direkt unterhalb des Freiraumes 88 zwischen den beiden Häuten 81, 82 liegt.

Gemäß der fünften Ausführungsform des erfindungsgemäßen Verfahrens wird nach dem Einlegen der Häute 81, 82 in die zweite Werkzeughälfte 80 in der ersten Werkzeughälfte 91 ein Träger angeordnet. Der Träger ist im Bereich, der der Überlappung der Endbereiche 84, 83 gegenüber liegt, in der Form einer Erhöhung ausgebildet. Die Form der Erhöhung ist der Art, dass beim Schließen des Werkzeuges der Träger 91 flächig in Kontakt mit der Oberfläche des innen liegenden Endbereiches 84 über den gesamten Verlauf der Überlappung kommt.

Des weiteren weist die zweite Werkzeughälfte 80 an ihrer Oberfläche im Bereich der Überlappung der Häute 81, 82 beidseitig des Kanals 90 zum Anlegen eines Überdruckes in einer Nut angeordnete aufblasbare elastische Dichtungsschläuche 92, 93 auf. Durch Aufblasen der Dichtungsschläuche 92, 93 ist es möglich, eine Überlappung der Häute 81, 82 gegen den gegenüber liegenden Träger 91 anzupressen.

Nach dem erfindungsgemäßen Verfahren wird nach Einlegen der Häute 81, 82 und des Trägers 91 über den Kanal 90 ein Unterdruck im Bereich der Überlappung der innen liegende Endbereich 84 an den außen liegenden Endbereich 83 schaumdicht angedrückt. Danach wird eine Schaummasse in das Werkzeug eingebracht und das Werkzeug geschlossen. Durch Schließen des Werkzeuges wird der Träger 91 flächig in Kontakt mit der Oberfläche des innen liegenden Endbereiches 84 gebracht. Danach werden die elastischen Dichtungsschläuche 92, 93 aufgeblasen, wodurch der Überlappungsbereich zusätzlich gegen den Träger 91 gepresst wird. Hierdurch kann sehr effektiv die Dichtung der Überlappung gewährleistet werden.

Alternativ kann zusätzlich im außen liegenden Endbereich 83 die Haut 81 durchgehende Öffnungen analog den ersten vier Ausführungsformen vorgesehen werden, um die Dichtung über Ausüben eines Unterdruckes an diesen Öffnungen weiter zu erhöhen.

Alternativ können anstatt Dichtschläuchen auch beispielsweise Schieber eingesetzt werden.

Alternativ kann unter Umständen auf eine Dichtlippe 86 und Aufnahmen 87a, 87b verzichtet werden.

Die Ausführungsbeispiele beziehen sich ausschließlich auf Hinterschäumprozesse bzw. Bauteile mit einer hinterschäumten Deckschicht. Alternativ kann in analoger Weise das erfindungsgemäße Verfahren auch in einem Spritzgusswerkzeug mit Hinterspritzen der Häute durchgeführt werden. Die Bauteile weisen entsprechend eine Spritzgussschicht auf, die hinter der aus den Häuten gebildeten Deckschicht liegt.

## Patentansprüche

1. Verfahren zur Herstellung eines Bauteils in einem Werkzeug mit einer eine Kavität bildenden ersten Werkzeughälfte (1) und zweiten Werkzeughälfte (2; 27; 40; 60; 80), folgenden Schritt umfassend:
a) Einlegen zumindest zweier Häute (3, 4; 20, 21; 41, 42; 81, 82) in die zweite Werkzeughälfte auf diese Weise, dass die Häute sich in ihren Endbereichen (5, 6; 22, 23; 43, 44; 83, 84) überlappen,
**dadurch gekennzeichnet, dass** folgende weitere Schritte umfasst sind:
b) Hinterschäumen oder Hinterspritzen der Häute mit einer Schaummasse (7, 24) oder Spritzmasse, wobei
c) durch Ausüben von Unterdruck im Bereich der Überlappung der innen liegende Endbereich (6; 23; 44; 84) der einen Haut (4; 21; 42; 82) an den außen liegenden Endbereich (5; 22; 43; 83) der anderen Haut (3; 20; 41; 81) schaumdicht oder spritzgussdicht angedrückt wird.

2. Verfahren nach Anspruch 1, **dadurch gekennzeichnet, dass** durch den Unterdruck der innen liegende Endbereich (6; 23; 44; 84) der einen Haut (4; 21; 42; 82) im Bereich der Überlappung zumindest bereichsweise in Richtung der Oberfläche (8) der zweiten Werkzeughälfte gedrückt wird.

3. Verfahren nach einem der vorhergehenden Ansprüche, **dadurch gekennzeichnet, dass** der außen liegende Endbereich (5; 22; 43) der einen Haut (3; 20; 41) im Überlappungsbereich durchgehende Öffnungen (9; 30; 45) zur Übertragung des Unterdrucks auf den innen liegenden Endbereich (6; 23; 44) der anderen Haut (4; 21; 42) aufweist, an denen ein Unterdruck ausgeübt wird.

4. Verfahren nach einem der vorhergehenden Ansprüche, **dadurch gekennzeichnet, dass** im Bereich des Randes des außen liegenden Endbereiches (43; 83) der einen Haut (41; 81) ein Unterdruck ausgeübt wird.

5. Verfahren nach einem der vorhergehenden Ansprüche, **dadurch gekennzeichnet, dass** die Endbereiche (5, 6; 22, 23) der Häute (3, 4; 20, 21) nach dem Einlegen der Häute in die zweite Werkzeughälfte (2; 27) zumindest bereichsweise miteinander verschmolzen werden.

6. Verfahren nach einem der vorhergehenden Ansprüche, **dadurch gekennzeichnet, dass** zumindest eine der Häute (3, 4; 20, 21) ein Thermoplast ist.

7. Verfahren nach einem der vorhergehenden Ansprüche, **dadurch gekennzeichnet, dass** die Häute (41, 42; 81, 82) in ihrem Überlappungsbereich derart geformt sind und derart angeordnet werden, dass diese während des Hinterschäumens oder Hinterspritzens durch den Druck der Schaummasse oder Spritzmasse zusammengepresst werden.

8. Verfahren nach Anspruch 7, **dadurch gekennzeichnet, dass** der innen liegende Endbereich (44; 84) der einen Haut (42; 82) im Randbereich eine angeschrägte Dichtungslippe aufweist.

9. Verfahren nach einem der vorhergehenden Ansprüche, **dadurch gekennzeichnet, dass** zumindest eine der Häute (42, 82) im Überlappungsbereich eine an die Oberfläche der gegenüberliegenden Haut (41, 81) grenzende Aussparung (47; 87a, 87b) aufweist zur Aufnahme von Schaummasse oder Spritzmasse, die möglicherweise in den Überlappungsbereich eindringen könnte.

10. Verfahren nach einem der vorhergehenden Ansprüche, **dadurch gekennzeichnet, dass** in der ersten Werkzeughälfte ein starrer Träger (51, 61,91) angeordnet wird, und durch Schließen des Werkzeugs der Träger mit dem innen liegenden Endbereich (44; 84) der einen Haut (42, 82) im Bereich des Überlappungsbereiches flächig in Kontakt gebracht wird.

11. Verfahren nach Anspruch 10, **dadurch gekennzeichnet, dass** in der zweiten Werkzeughälfte (80) an ihrer Oberfläche im Bereich der Überlappung der Häute (81, 82) ein in seiner Ausdehnung veränderbares, entlang des Überlappungsbereiches verlaufendes Element, vorzugsweise ein elastischer Schlauch (92, 93), vorgesehen ist, und mittels dieses Elementes der Überlappungsbereich gegen den Träger (91) gepresst wird.

12. Bauteil mit zumindest zwei nebeneinander angeordneten Häuten (3, 4; 20, 21; 41, 42), die sich in ihren Endbereichen (5, 6; 22, 23; 43, 44) überlappen, und einer hinter den Häuten liegenden Schaumschicht (7) oder Spritzgussschicht, **dadurch gekennzeichnet, dass** der außen liegende Endbereich (5; 22; 43) der einen Haut (3; 20; 41) im Bereich der Überlappung durchgehende Öffnungen (9, 30, 45) aufweist.

13. Bauteil nach Anspruch 12, **dadurch gekennzeichnet, dass** der innen liegende Endbereich (44) der einen Haut (42) im Randbereich des Endbereiches eine angeschrägte Dichtungslippe (46) aufweist.

14. Bauteil nach einem der Ansprüche 12 bis 13, **dadurch gekennzeichnet, dass** zumindest eine der Häute (42) im Überlappungsbereich eine an die Oberfläche der gegenüberliegenden Haut (41) grenzende Aussparung (47) aufweist.

15. Bauteil nach einem der Ansprüche 12 bis 14, **dadurch gekennzeichnet, dass** das Bauteil einen Träger (61) aufweist, der den innen liegenden Endbereich (44) der einen Haut (42) im Bereich der Überlappung flächig berührt.

## Claims

1. Method for producing a component in a mould having a cavity-forming first mould half (1) and second mould half (2; 27; 40; 60; 80), comprising the following step:
a) inserting at least two skins (3, 4; 20, 21; 41, 42; 81, 82) into the second mould half such that the skins overlap in their end regions (5, 6; 22, 23; 43, 44; 83, 84),
**characterised in that** it comprises the following further steps:
b) foam-backing or backmoulding the skins with a foam material (7, 24) or injection moulding material,
c) low pressure being exerted in the region of the overlap to press the inner end region (6; 23; 44; 84) of one skin (4; 21; 42; 82) against the outer end region (5; 22; 43; 83) of the other skin (3; 20; 41; 81) in a foam-tight manner or an injection moulding-tight manner.

2. Method according to Claim 1, **characterised in that** as a result of the low pressure, the inner end region (6; 23; 44; 84) of one skin (4; 21; 42; 82) in the region of the overlap is pressed at least in regions in the direction of the surface (8) of the second mould half.

3. Method according to one of the preceding claims, **characterised in that** the outer end region (5; 22; 43) of one skin (3; 20; 41) has through-openings (9; 30; 45) in the overlapping region for transmitting the low pressure to the inner end region (6; 23; 44) of the other skin (4; 21; 42), at which openings a low pressure is exerted.

4. Method according to one of the preceding claims, **characterised in that** a low pressure is exerted in the region of the edge of the outer end region (43; 83) of one skin (41; 81).

5. Method according to one of the preceding claims, **characterised in that** the end regions (5, 6; 22, 23) of the skins (3, 4; 20, 21) are fused together at least in regions after insertion of the skins into the second mould half (2; 27).

6. Method according to one of the preceding claims, **characterised in that** at least one of the skins (3, 4; 20, 21) is a thermoplastic.

7. Method according to one of the preceding claims, **characterised in that** in their overlapping region the skins (41, 42; 81, 82) are formed in such a manner and disposed in such a manner that they are pressed together by the pressure of the foam material or the injection moulding material during the foam-backing or backmoulding.

8. Method according to Claim 7, **characterised in that** the inner end region (44; 84) of one skin (42; 82) has a sloping sealing lip in the edge region.

9. Method according to one of the preceding claims, **characterised in that** at least one of the skins (42, 82) has a recess (47; 87a, 87b) bordering on the surface of the opposite skin (41, 81) in the overlapping region, for receiving foam material or injection moulding material which could possibly penetrate into the overlapping region.

10. Method according to one of the preceding claims, **characterised in that** a rigid carrier (51, 61, 91) is arranged in the first mould half, and by closing the mould the carrier is brought into contact in a planar manner with the inner end region (44; 84) of one skin (42, 82) in the region of the overlapping region.

11. Method according to Claim 10, **characterised in that** at the surface of the second mould half (80) in the region of the overlap of the skins (81, 82), there is provided an element which can be changed in its extent and runs along the overlapping region, preferably an elastic hose (92, 93), and by means of this element, the overlapping region is pressed against the carrier (91).

12. Component comprising at least two adjacently disposed skins (3, 4; 20, 21; 41, 42) which overlap in their end regions (5, 6; 22, 23; 43, 44), and a foam layer (7) or an injection moulding layer, situated behind the skins, **characterised in that** the outer end region (5; 22; 43) of one skin (3; 20; 41) has through-openings (9, 30, 45) in the region of the overlap.

13. Component according to Claim 12, **characterised in that** the inner end region (44) of one skin (42) has a sloping sealing lip (46) in the edge region of the end region.

14. Component according to one of Claims 12 to 13, **characterised in that** at least one of the skins (42) has a recess (47) bordering on the surface of the opposite skin (41) in the overlapping region.

15. Component according to one of Claims 12 to 14, **characterised in that** the component has a carrier (61) touching the inner end region (44) of one skin (42) in a planar manner in the region of the overlap.

## Revendications

1. Procédé de réalisation d'une pièce d'équipement dans un moule avec une première moitié (1) de moule formant une cavité et une deuxième moitié (2 ; 27 ; 40 ; 60 ; 80) de moule, comportant l'étape suivante :
a) insertion d'au moins deux peaux (3, 4 ; 20, 21 ; 41, 42 ; 81, 82) dans la deuxième moitié du moule, de telle sorte que les peaux se chevauchent dans leurs parties marginales (5, 6 ; 22, 23 ; 43, 44 ; 83, 84),
**caractérisé en ce que** ledit procédé comporte les étapes supplémentaires suivantes :
b) moulage par moussage ou moulage par injection avec une mousse (7, 24) ou un matériau de moulage injecté derrière les peaux, sachant que
c) par l'application d'une dépression dans la zone du chevauchement, la partie marginale (6 ; 23 ; 44 ; 84) intérieure de l'une des peaux (4 ; 21 ; 42 ; 82) est plaquée, de manière étanche à la mousse injectée ou étanche au matériau de moulage injecté, contre la partie marginale (5 ; 22 ; 43 ; 83) extérieure de l'autre peau (3 ; 20 ; 41 ; 81).

2. Procédé selon la revendication 1, **caractérisé en ce que**, sous l'effet de la dépression, la partie marginale (6 ; 23 ; 44 ; 84) intérieure de l'une des peaux (4 ; 21 ; 42 ; 82) est plaquée, dans la zone du chevauchement, au moins par zones vers la surface (8) de la deuxième moitié du moule.

3. Procédé selon l'une quelconque des revendications précédentes, **caractérisé en ce que** la partie marginale (5 ; 22 ; 43) extérieure de l'une des peaux (3 ; 20 ; 41) comporte, dans la zone du chevauchement, des ouvertures débouchantes (9 ; 30 ; 45) pour transmettre la dépression sur la partie marginale (6 ; 23 ; 44) intérieure de l'autre peau (4 ; 21 ; 42), sur lesquelles est exercée une dépression.

4. Procédé selon l'une quelconque des revendications précédentes, **caractérisé en ce qu'**une dépression est exercée dans la zone du bord de la partie marginale (43 ; 83) extérieure de l'une des peaux (41 ; 81).

5. Procédé selon l'une quelconque des revendications précédentes, **caractérisé en ce que** les parties marginales (5, 6 ; 22, 23) des peaux (3, 4 ; 20, 21) sont amalgamées au moins par zones, après l'insertion des peaux dans la deuxième moitié (2 ; 27) du moule.

6. Procédé selon l'une quelconque des revendications précédentes, **caractérisé en ce qu'**au moins l'une des peaux (3, 4 ; 20, 21) est une matière thermoplastique.

7. Procédé selon l'une quelconque des revendications précédentes, **caractérisé en ce que** les peaux (41, 42 ; 81, 82) dans leur zone de chevauchement sont formées et sont disposées de telle sorte que, pendant le moulage par moussage ou le moulage par injection du matériau derrière les peaux, lesdites peaux sont comprimées l'une contre l'autre par la pression de la mousse ou du matériau de moulage injectés.

8. Procédé selon la revendication 7, **caractérisé en ce que** la partie marginale (44 ; 84) intérieure de l'une des peaux (42 ; 82) comporte une lèvre d'étanchéité biseautée dans la zone du bord.

9. Procédé selon l'une quelconque des revendications précédentes, **caractérisé en ce qu'**au moins l'une des peaux (42, 82) dans la zone du chevauchement comporte un évidement (47 ; 87a, 87b) adjacent à la surface de la peau (41, 81) située en regard, lequel est destiné à recevoir la mousse ou le matériau de moulage injectés qui pourraient éventuellement pénétrer dans la zone du chevauchement.

10. Procédé selon l'une quelconque des revendications précédentes, **caractérisé en ce que** dans la première moitié du moule est disposé un support (51, 61, 91) rigide, et, sous l'effet de la fermeture du moule, le support est amené en contact suivant une surface continue avec la partie marginale (44 ; 84) intérieure de l'une des peaux (42, 82) dans la zone du chevauchement.

11. Procédé selon la revendication 10, **caractérisé en ce que** dans la deuxième moitié (80) du moule, sur sa surface dans la zone du chevauchement des peaux (81, 82), il est prévu un élément, de préférence un tube (92, 93) élastique, d'extension variable, s'étendant le long de la zone du chevauchement, et la zone du chevauchement est plaquée au moyen de cet élément contre le support (91).

12. Pièce d'équipement comportant au moins deux peaux (3, 4 ; 20, 21 ; 41, 42), disposées l'une à côté de l'autre et se chevauchant dans leurs parties marginales (5, 6 ; 22, 23 ; 43, 44), et une couche de mousse (7) ou une couche de matériau de moulage injecté, située derrière lesdites peaux, **caractérisé en ce que** la partie marginale (5 ; 22 ; 43) extérieure de l'une des peaux (3 ; 20 ; 41) comporte des ouvertures débouchantes (9, 30, 45) dans la zone du chevauchement.

13. Pièce d'équipement selon la revendication 12, **caractérisé en ce que** la partie marginale (44) intérieure de l'une des peaux (42) comporte une lèvre d'étanchéité (46) biseautée dans la zone du bord de la partie marginale.

14. Pièce d'équipement selon l'une quelconque des revendications 12 à 13, **caractérisé en ce qu'**au moins l'une des peaux (42) comporte, dans la zone du chevauchement, un évidement (47) adjacent à la surface de la peau (41) située en regard.

15. Pièce d'équipement selon l'une quelconque des revendications 12 à 14, **caractérisé en ce que** l'élément d'équipement comporte un support (61), qui entre en contact suivant une surface continue avec la partie marginale (44) intérieure de l'une des peaux (42), dans la zone du chevauchement.
